# EUROPEAN PATENT APPLICATION

(11) **EP 3 196 811 A1**
(43) Date of publication of application: **26.07.2017**
(21) Application number: 16305050.3
(22) Date of filing: 20.01.2016
(51) Int. Cl.: G06Q 10/00

(54) **COGNITIVE DOCUMENT READER**

(71) Applicant: Accenture Global Services Limited, Dublin 4 (IE)
(72) Inventor: BATALLER, Cyrille, 06250 MOUGINS (FR)
(74) Representative: Boult Wade Tennant

(57) **Abstract**

This document describes systems, methods, devices, and other techniques for cognitive document classification. In some implementations, a computing device receives an image that shows a document, analyzes the image to identify visible features of the document, provides, to a classifier, data that characterizes the identified visible features of the document, determines, by the classifier and based on the data that characterizes the identified visible features of the document, a particular document type among a plurality of pre-defined document types that corresponds to the document shown in the image, and outputs an indication of the particular document type that corresponds to the document shown in the image.

## Description

### TECHNICAL FIELD

This specification generally relates to methods, systems, devices, and other techniques for document processing and information extraction, including a cognitive document reader that can efficiently classify a document and process the document according to its classification.

### BACKGROUND

Among the basic tasks performed by individuals, businesses, and other organizations on a daily basis is document intake and processing. Businesses, for example, may consume significant human and capital resources to process high volumes of mail received from its customers, suppliers, and other business partners. In some instances, business employees manually sort through received mail and deliver the mail to an appropriate business unit for further processing. The recipient business unit may act on the mail in different ways, including by entering its relevant content into a computer database, responding to the mailer, or setting up a workflow item according to instructions contained in the mail. Manual mail intake and processing, however, can be expensive, slow, and prone to human error.

### SUMMARY

Innovative aspects of the subject matter described in this specification may be embodied in methods that include the actions of receiving an image that shows a document; analyzing the image to identify visible features of the document; providing, to a classifier, data that characterizes the identified visible features of the document; determining, by the classifier and based on the data that characterizes the identified visible features of the document, a particular document type among a plurality of pre-defined document types that corresponds to the document shown in the image; and outputting an indication of the particular document type that corresponds to the document shown in the image.

Other embodiments of this aspect include corresponding computer systems, apparatus, and computer programs recorded on one or more computer storage devices, each configured to perform the actions of the methods. A system of one or more computers can be configured to perform particular operations or actions by virtue of having software, firmware, hardware, or a combination thereof installed on the system that in operation causes or cause the system to perform the actions. One or more computer programs can be configured to perform particular operations or actions by virtue of including instructions that, when executed by data processing apparatus (e.g., one or more computers or computer processors), cause the apparatus to perform the actions. One or more computer storage media can be encoded with a computer program, the program comprising instructions that when executed by data processing apparatus cause the data processing apparatus to perform the operations of the method.

The foregoing and other embodiments can each optionally include one or more of the following features, alone or in combination.

In some implementations determining a particular document type that corresponds to the document shown in the image does not require converting the document to text.

In some implementations the method further comprises generating a structured dataset that characterizes the document, wherein generating a structured dataset comprises: based on the determined particular document type that corresponds to the document shown in the image, identifying fields of information associated with the particular document; based on the identified visible features of the document, identifying values for the identified fields of information associated with the particular document; and generating a structured dataset that characterizes the document using the identified fields of information associated with the particular document and the identified values for the identified fields of information.

In other implementations identifying values for the identified fields of information associated with the particular document does not comprise converting the image to text.

In some cases the method further comprises providing the generated structured dataset to a corresponding department for processing.

In some implementations analyzing the image to identify visible features of the document comprises analyzing the image to identify one or more of (i) tables, (ii) logos, (iii) headers, (iv) stamps, (v) captions, (vi) graphs, (vii) bullet points or (viii) handwritten text included in the image.

In other cases the method further comprises identifying metadata associated with the document, the metadata including data that is not among the visible features of the document shown in the image; and providing, to the classifier, the identified metadata associated with the document; wherein the particular document type is determined by the classifier further based on the identified metadata.

In some implementations the metadata associated with the document includes one or more of (i) a date the document was received, (ii) a sender of the document, (iii) an address of the sender of the document, (iv) a number of pages of the document, (v) an intended recipient of the document, and (vi) bank account details.

In some cases analyzing the image to identify visible features of the document comprises comparing one or more portions of the image to a collection of pre-stored images to determine an image match.

In other cases analyzing the image to identify visible features of the document comprises comparing the format of one or more portions of the image to a collection of pre-stored formatted images to determine an image format match.

In some implementations analyzing the image to identify visible features of the document does not require converting the document to text.

In some cases the method further comprises training the classifier to perform document classification, the training comprising: obtaining a training set of images that show respective documents; analyzing the training set of images to identify visible features of the documents; identifying metadata associated with the documents; and training the classifier based on the identified visible features of the documents and the identified metadata associated with the documents.

In some cases the method further comprises using the classifier to perform document classification; obtaining a new training set of images that show respective documents; and retraining the classifier based on the new training set of images that show respective documents.

In other cases the method further comprises using the classifier to perform document classifications; obtaining feedback relating to performed document classifications; and retraining the classifier based on the obtained feedback.

Some implementations of the subject matter described herein may realize, in certain instances, one or more of the following advantages. A system implementing cognitive document classification may improve the rate at which documents may be taken in and processed compared to systems that do not implement cognitive document classification, thus improving process efficiency. Furthermore, a system implementing cognitive document classification may incur a reduced amount of errors, e.g., human errors, and an increase in document classification accuracy when processing and classifying documents compared to other systems that do not implement cognitive document classification.

A system implementing cognitive document classification integrates multiple stages of a document intake and processing workflow and may therefore improve the efficiency of the document intake and processing workflow and reduce the complexity of the resources required by the document intake and processing workflow compared to systems that do not implement cognitive document classification.

In addition, a system implementing cognitive document classification may be trained using training data for specific classification tasks, e.g., those relevant to a particular business or department, and may continuously learn over time to improve its accuracy and reliability, for example by exposing the system to an increased amount or types of training data.

The details of one or more embodiments of the subject matter described in this specification are set forth in the accompanying drawings and the description below. Other potential features, aspects, and advantages of the subject matter will become apparent from the description, the drawings, and the claims.

### DESCRIPTION OF DRAWINGS

FIGS. 1A and 1B depict example images showing respective documents. In particular, FIG. 1A shows an employment recruitment letter, and FIG. 1B shows an invoice, with each image showing different sets of visible features.
FIG. 2 depicts a conceptual block diagram of an example process for cognitive document classification.
FIG. 3 depicts an example system for cognitive document classification.
FIG. 4 is a flowchart of an example process for cognitive document classification.
FIG. 5 is a flowchart of an example process for training a cognitive document classifier.
FIG. 6 depicts an example computing device that may be used to carry out the computer-implemented methods and other techniques described herein.

Like reference symbols in the various drawings indicate like elements.

### DETAILED DESCRIPTION

This specification describes a systems, methods, devices, and other techniques for cognitively recognizing different types of documents. The system may receive an image that shows a document and may analyze the image using computer vision to identify visible features of the image such as certain formats, logos, tables, stamps and handwritten text. The system may process the identified visible features using a classifier or other model, trained using machine learning techniques, to determine a particular document type that corresponds to the document shown in the image. The document may then be routed to appropriate destinations based on document type workflows. The system may be trained using a training set of images to become more intelligent and to better recognize visible features and formats of documents.

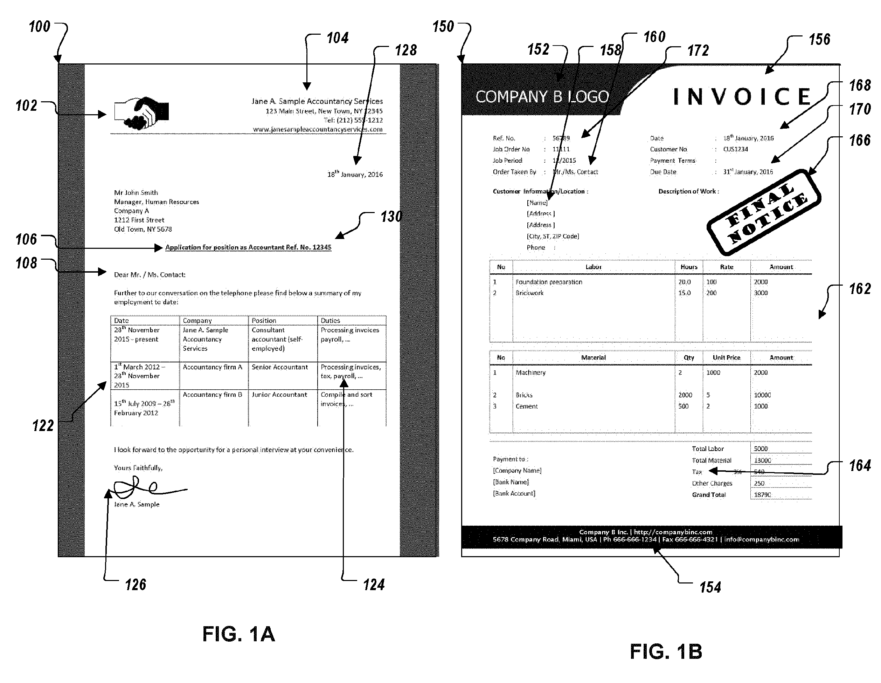

FIGS. 1A and 1B depict two example images 100 and 150 showing respective documents. The documents shown by the example images 100 and 150 may correspond to a particular document type among a set of pre-defined document types. Document types may include invoices, billing statements, recruitment letter, quotations, receipts, resumes, letters, or SPAM, to name a few. In this example, example image 100 shows a document that is a recruitment letter and example image 150 shows a document that is an invoice.

Both images 100 and 150 contain one or more visible features of the respective documents. Visible features of a document may include tables, logos, headers, stamps, captions, graphs, bullet points, printed text or handwritten text, to name a few. For example, image 100 contains a company logo 102, a header 106, a table 122, and a handwritten signature 126. Similarly, image 150 contains a company logo 152, a logo indicating contact information for the company 154, a header 156, two tables, e.g., table 162, and a stamp 166.

Both images 100 and 150 contain metadata that may not be included among the visible features of the respective documents. Metadata associated with a document may include, for example, a date the document was received, a name and address of the sender of the document, an intended recipient, a number of pages of the document, or bank account details. For example, image 100 contains a name and address of the sender 104, text, e.g., text 124, an intended recipient of the document 108, a date in which the document was created 128, and a reference number 130. Similarly, image 150 contains an intended recipient of the document 158, a named contact person at the company 160, text, e.g., text 164, a date in which the document was created 168, a due date 170 and a reference number 172. In some examples, the metadata may not be visibly shown on the document image itself, but may instead be a property of the document or may be data associated with the document that the system can identify by other means (e.g., outside the context of image analysis).

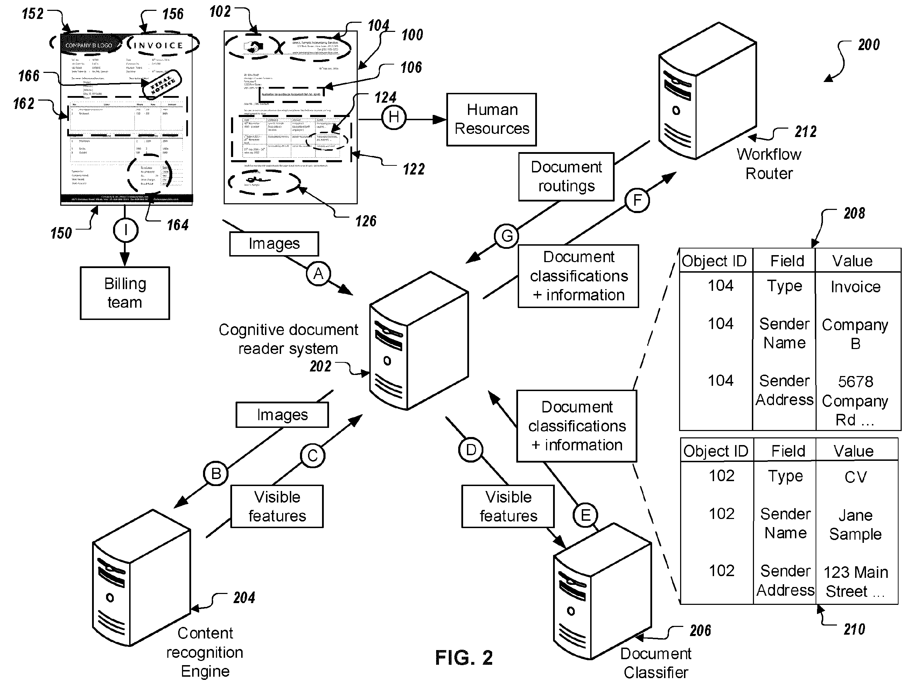

The images 100 and 150 may be provided to a cognitive document classification system for document classification. Performing document classification using a cognitive document classification system is described in more detail below with reference to FIGS. 2 - 4.

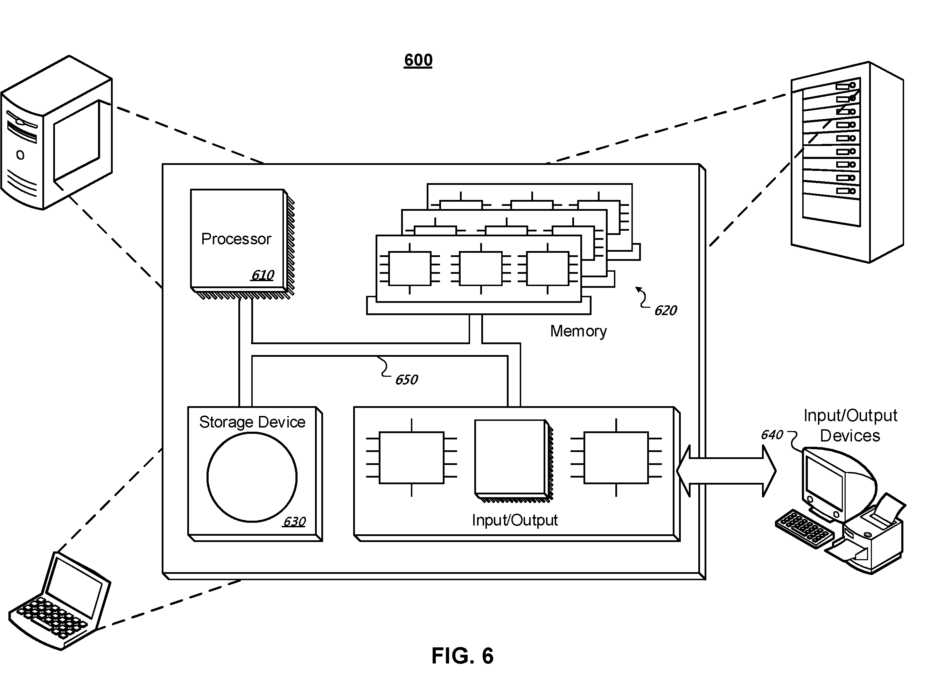

FIG. 2 depicts a conceptual block diagram of an example computing system performing a process of cognitive document classification. The system 200 can be enabled to receive data that represents an image that shows a document. The image may be analyzed to determine visible features of the image. Based on the visible features of the image, the system 200 can determine a particular document type that corresponds to the document and can generate a structured dataset that characterizes the document. The system 200 may provide data that indicates the document type, the generated structured dataset, the original image of the document, or a combination of these, to appropriate destinations (e.g., business units or departments) for processing. Generally, the system 200 can be implemented as a system of one or more computers having physical hardware like that described with respect to FIG. 6.

Briefly, the system 200 includes a cognitive document reader system 202, a content recognition engine 204, a document classifier 206 and a workflow router 212. The components of the system 200 can exchange electronic communications over one or more networks, or can exchange communications in another way, such as over one or more wired or wireless connections. As depicted in FIG. 2, the process associated with cognitive document classification in response to receiving an image that shows a document can be accomplished by the system 200.

During stage (A) of the process for cognitive document classification, the cognitive document reader system 202 receives data representing one or more images that show respective documents. For example, the cognitive document reader system 202 may receive data representing images 100 and 150 as described in more detail above with reference to FIGS. 1A and 1B.

During stage (B), the cognitive document reader system 202 can transmit data that represents the one or more images to the content recognition engine 204. The content recognition engine 204 can receive data that represents the one or more images and analyze the images to identify visible features of the images. For example, the content recognition engine 204 can receive data that represents image 150 and analyze the image 150 to identify visible features of the image, such as visible features 152, 156, 166, 162 and 164 described above with reference to FIG. 1B. Similarly, the content recognition engine 204 can receive data that represents image 100 and analyze the image 100 to identify visible features of the image, such as visible features 102, 104, 106, 124, 122 and 126 described above with reference to FIG. 1A. In some implementations, the content recognition engine 204 may identify visible features of the received images, or data that represents the received images, without converting the image to text (e.g., without performing optical character recognition (OCR) on the document shown in the image).

The content recognition engine 204 may identify visible features of the received images by comparing portions of the received images to a collection of pre-stored images to determine an image match. For example, the content recognition engine may have pre-stored logos of companies and may identify a company logo by comparing a portion of the image to the pre-stored company logos. Similarly, the content recognition engine may have pre-stored images of stamps and may identify a stamp on an image by comparing a portion of the image to the pre-stored images of stamps.

The content recognition engine 204 may also identify visible features of the received images by comparing the format of one or more portions of the received images, e.g., the position in which certain fields of information appear, to a collection of pre-stored formatted images to determine an image format match. For example, the content recognition engine may have pre-stored formatted images from certain companies or pre-stored formatted images from different document types and may identify a particular formatting by comparing a portion of the image, e.g., the position of a header, logo, table or address, to the pre-stored formatted images.

The content recognition engine 204 can further analyze the one or more images to identify metadata associated with the documents shown in the images. The metadata may include data that is not among the visible features of the document shown in the image. For example, the content recognition engine 204 can analyze the image 100 to identify metadata such as 164 described above with reference to FIG. 1B. Similarly, the content recognition engine 204 can analyze the image 150 to identify metadata such as 124, 104 and 106 described above with reference to FIG. 1A. The content recognition engine 204 may identify metadata associated with the documents shown in the images without converting the image to text.

During stage (C) the content recognition engine 204 may transmit data that represents identified visible features of the one or more images, and in some cases data that represents metadata associated with the documents shown in the images, to the cognitive document reader system 202. During stage (D), the cognitive document reader system 202 may transmit data that represents the identified visible features and identified metadata to the document classifier 206. The document classifier 206 can receive the data that represents the identified visible features of the one or more images and determine corresponding document types for the one or more images based on the data that represents the identified visible features. For example, the document classifier 206 may receive data representing identified visible features of image 100 and determine that the document shown in the image 100 is a recruitment letter. Similarly, the document classifier 206 may receive data representing identified visible features of image 150 and determine that the document shown in the image 150 is an invoice.

The document classifier may further generate a structured dataset representing the documents shown in the one or more images. In some implementations, based on the determined document types for the one or more images, the document classifier may identify fields of information associated with the particular document type. For example, an invoice may be correlated with certain fields that are likely to be contained in an invoice document, some of which fields may be different than the fields that are likely to be contained in a recruitment letter. Furthermore, based on the identified visible features of the document, and in some cases the identified metadata associated with the document, the document classifier 206 may identify values for the identified fields of information associated with the particular document type. For example, the document classifier 206 may generate structured dataset 208 representing the document shown in image 150. The structured dataset 208 indicates that the document classifier has identified the document type as an invoice, and has identified at least the fields of information "sender name" and "sender address," with corresponding values "Company B" and "5768 Company Rd..." Similarly, the document classifier 206 may generate structured dataset 210 representing the document shown in image 100. The structured dataset 210 indicates that the document classifier has identified the document type as a recruitment letter or "CV", and has identified at least the fields of information "sender name" and "sender address," with corresponding values "Jane Sample" and "123 Main Street..."

As shown in the generated structured datasets 208, based on the identified visible features, the document classifier may correctly identify the meaning of particular terms or features included in a document. For example, the document classifier may use the identified visible features and document type to correctly identify an address of a sender of a document, e.g., "5678 Company Road," and the address of a recipient of a document, e.g., address 158. In addition, based on the identified visible features, the document classifier may correctly identify the document type using the document context. For example, two documents may include the same phrase or portion of text, but the context in which the phrase or portion of text appears may differ. For example, both images 100 and 150 include the word "invoice" and the word "tax." However, the document classifier 206 may identify that the word "invoice" in image 150 appears as a header, whereas the word "invoice" in image 100 appears as text in a table. Accordingly, the document classifier may determine that the appearance of the word "invoice" in the header of the document more likely indicates that the document is an invoice. Similarly, the document classifier may identify that the word "tax" in image 100 appears in a list of text, whereas the word "tax" in image 150 appears as part of a calculation at the bottom of a table. Accordingly, the document classifier may determine that the appearance of the word "tax" in image 150 more likely indicates that the document is an invoice or receipt.

During stage (E), the document classifier 206 transmits data representing the document types and the generated structured datasets to the cognitive document reader 202. The cognitive document reader 202 may receive the transmitted data and during stage (F) may forward the transmitted data to a workflow router 212. The workflow router 212 may receive the transmitted data and analyze the data in order to determine a document routing for the image showing the document or for the corresponding generated structured dataset. For example, the workflow router 212 may receive structured datasets 208 and 210 and analyze the data to determine that structured dataset 208 corresponds to a recruitment letter and that the document and or the data associated with the document should be routed to the human resources department. Similarly, the workflow router 212 may determine that structured dataset 210 corresponds to an invoice and that the document and or the data associated with the document should be routed to the billing team.

During stage (G), the workflow router transmits data representing the determined document routings to the cognitive document reader system 202. The cognitive document reader system 202 receives the transmitted data and provides the generated structured datasets to the corresponding departments for processing, e.g., data representing image 100 is provided to the human resources department (H) and data representing image 150 is provided to the Billing team (I). In some implementations the cognitive document reader system 202 provides the corresponding structured dataset to the corresponding department for processing. In other implementations the cognitive document reader system 202 provides the corresponding structured dataset with the image showing the document for processing.

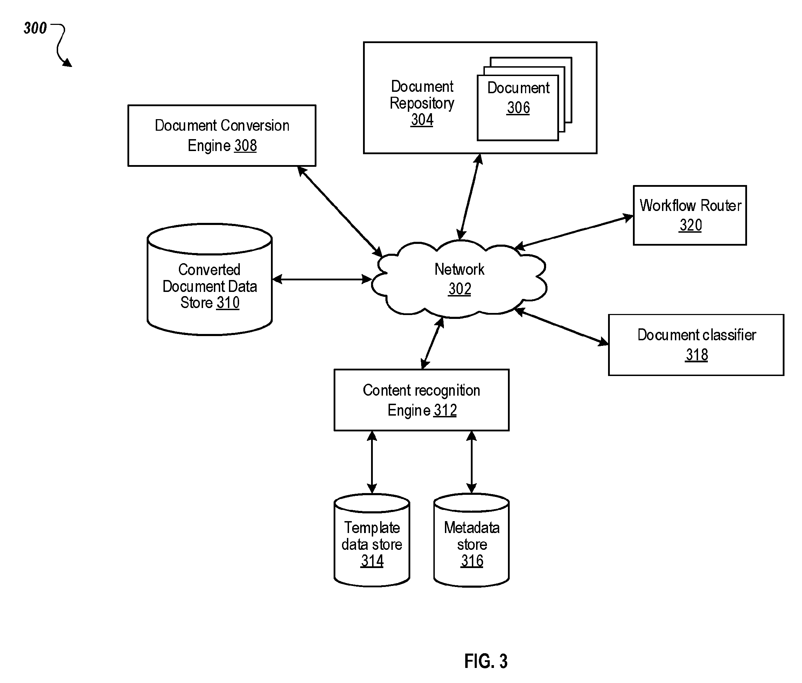

FIG. 3 depicts an example system for cognitive document classification. In some implementations, a computer network 302, such as a local area network (LAN), wide area network (WAN), the Internet, or a combination thereof, connects document repository 304, document conversion engine 308, converted document data store 310, content recognition engine 312, document classifier 318 and workflow router 320. In some implementations, all or some of the document repository 304, document conversion engine 308, converted document data store 310, content recognition engine 312, document classifier 318, and workflow router 320 can be implemented in a single computing system, and may communicate with none, one, or more other components over a network.

Document repository 104 includes one or more documents, e.g., document 306. A document may include written and printed pieces of information such as letters, statements, advertisements, receipts, contracts, deeds, written agreements, official forms or papers, or bills.

Document conversion engine 308 may be configured to receive one or more documents, e.g., document 306, and convert the document to a digital form, e.g., an image showing the document. The converted documents, i.e., images, may be stored in a converted document data store 310.

Content recognition engine 312 may be configured to analyze images, e.g., converted documents stored in converted document data store 310, and identify features of the images. The features of the images may include visible features such as logos, headers, graphs, tables, bullet points, stamps or handwritten text and may also include metadata associated with the document shown in the image, such as text or a number of pages of the document. The content recognition engine 312 may identify features of the images by accessing a template data store 314 and a metadata store 316 and comparing portions of the image to images stored in the data stores to determine image matches. For example, the template data store 314 may include pre-stored images such as logos or tables to which the content recognition engine can compare portions of a converted document to. The template data store 314 may also include pre-stored formatted images such as formal letters or invoices, to which the content recognition engine can compare portions or all of a converted document to.

Document classifier 318 may access the features identified by the content recognition engine 312 and classify the document as being of a particular type. For example, the document classifier 318 may include a neural network that is trained to determine whether a received image of a document is compliant or not, or whether a received image of a document has a particular document type among a plurality of pre-defined document types.

Content recognition engine 312 may further be configured to generate a structured dataset that characterizes a converted document based on identified features of the image showing the document and a determined particular document type. For example, content recognition engine 312 may identify features of an image showing a document, receive a document classification from a document classifier such as document classifier 318 and identify fields of information to be included in a structured dataset as well as values for the fields of information.

Workflow router 320 may be configured to receive a determined document type of a document shown in an image and determine an appropriate routing of the document based on the determined document type. For example, the workflow router may receive an indication that a particular document has been classified as being an invoice, and may therefore send the image of the document or the generated structured dataset characterizing the document shown in the image to a billing department for processing.

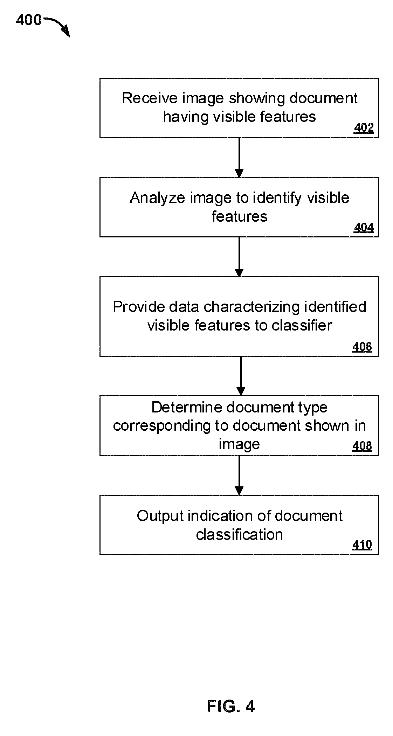

FIG. 4 is a flowchart of an example process 400 for cognitive document classification. In some implementations, the process 400 may be carried out by the devices and systems described herein, including computing system 300 depicted in FIG. 3. Although the flowchart depicts the various stages of the process 400 occurring in a particular order, certain stages may in some implementations be performed in parallel or in a different order than what is depicted in the example process 400 of FIG. 4.

At step 402, the system receives an image that shows a document.

At step 404, the system analyzes the image to identify visible features of the document. For example, the system may analyze the image to identify one or more of (i) tables, (ii) logos, (iii) headers, (iv) stamps, (v) captions, (vi) graphs, (vii) bullet points or (viii) handwritten text included in the image. In some implementations the system may not require that the document or image showing the document is converted to text in order to identify visible features of the document.

In some implementations the system may analyze the image to identify visible features of the document by comparing one or more portions of the image to a collection of pre-stored images, e.g., images stored in a template data store as described above with reference to FIG. 3, to determine an image match.

In further implementations the system may analyze the image to identify visible features of the document by comparing the format of one or more portions of the image to a collection of pre-stored formatted images, e.g., images stored in a template data store as described above with reference to FIG. 3, to determine an image format match.

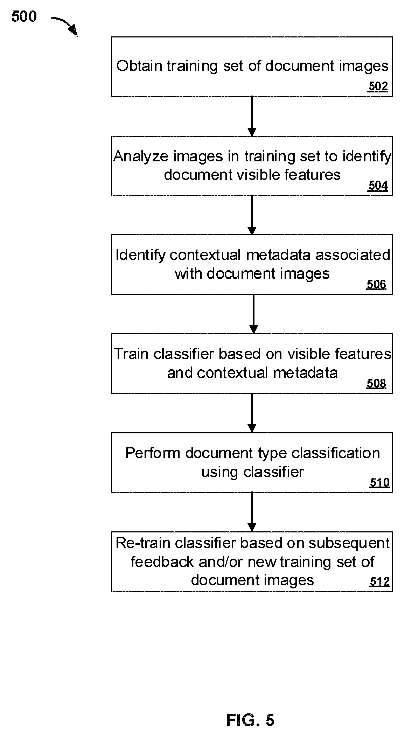

At step 406, the system provides data that characterizes the identified visible features of the document to a classifier. The classifier may have been trained to perform document classification using a training set of images, as described below with reference to FIG. 5. In some implementations the system may further identify metadata associated with the document and provide the identified metadata associated with the document to the classifier. The metadata may include data that is not among the visible features of the document shown in the image. For example, the metadata associated with the document may include one or more of (i) a date the document was received, (ii) a sender of the document, (iii) an address of the sender of the document, (iv) a number of pages of the document, (v) an intended recipient of the document, and (vi) bank account details.

At step 408, the system determines, by the classifier and based on the data that characterizes the identified visible features of the document, a particular document type among a plurality of pre-defined document types that corresponds to the document shown in the image. The plurality of pre-defined document types may include invoices, billing statements, recruitment letter, quotations, receipts, resumes, letters, or SPAM. In some implementations the particular document type is determined by the classifier further based on the metadata identified above with reference to step 406. The system may determine a particular document type that corresponds to the document shown in the image without requiring that the document is converted to text.

At step 410, the system outputs an indication of the particular document type that corresponds to the document shown in the image.

In some implementations the system may further generate a structured dataset that characterizes the document. For example, based on the determined particular document type that corresponds to the document shown in the image, the system may identify fields of information associated with the particular document. For example, if it is determined at step 408 that the document shown in the image is an invoice, the system may identify the name of the company that sent the invoice, the amount due and bank details to which the amount is to be paid as fields of information that are associated with the document. As another example, if it is determined at step 408 that the document shown in the image is a recruitment letter, the system may identify the name of the sender of the letter, the address of the sender, and the position in which the sender is interested in applying for as fields of information that are associated with the document.

The system may further identify values for the identified fields of information associated with the particular document based on the identified visible features of the document. For example, if the system identified a company logo and an amount due as visible features of the document, the system may identify the name and address of the company associated with the identified company logo and the exact monetary amount due to be paid as values for the identified fields of information. In some implementations the system may identify values for the identified fields of information associated with the particular document without converting the image to text.

The system may generate a structured dataset that characterizes the document using the identified fields of information associated with the particular document and the identified values for the identified fields of information. For example, the generated structured dataset may include name/value pairs, as shown in tables 208 and 210 of FIG. 2 above.

In some implementations the system may provide the generated structure dataset to a corresponding department for processing. For example, if it was determined at step 408 that the document is an invoice, the system may provide the generated structured dataset to an accounting or billing department for processing. As another example, if it was determined at step 408 that the document is a recruitment letter, the system may provide the generated structured dataset to the human resources department for processing. In some implementations the system may provide the generated structured dataset together with the image showing the document to the corresponding department for processing. In other implementations the system may provide only the image showing the document to the corresponding department for processing. In further implementations the system may provide the original received document, alone, in or combination with the generated structured dataset and/or the image showing the document to the corresponding department for processing.

FIG. 5 is a flowchart of an example process 500 for training a cognitive document classifier. In some implementations, the process 500 may be carried out by the devices and systems described herein, including computing system 300 depicted in FIG. 3. Although the flowchart depicts the various stages of the process 500 occurring in a particular order, certain stages may in some implementations be performed in parallel or in a different order than what is depicted in the example process 500 of FIG. 5.

At step 502, the system obtains a training set of images that show respective documents. For example, each image in the training set of images may show a respective document. The training set of images may show respective documents of different document types, for example invoices, billing statements, recruitment letter, quotations, receipts, resumes, letters, or SPAM.

At step 504, the system analyzes the training set of images to identify visible features of the documents. Analyzing images to identify visible features of documents is described in more detail above with reference to step 404 of FIG. 4.

At step 506, the system identifies metadata associated with the documents. Identifying metadata associated with documents is described in more detail above with reference to step 406 of FIG. 4.

At step 508, the system trains the classifier based on the identified visible features of the documents and the identified metadata associated with the documents. For example, the system may use the identified visible features of the documents and the identified metadata associated with the documents in order to determined trained values of parameters of the classifier, i.e., to adjust the values of parameters from initial values to trained values. For example, during training, the classifier can process a training set of images and generate a respective output for each image in the training set. The outputs can then be used to adjust the values of the parameters of the components of the classifier.

At step 510, the system retrains the classifier. For example, the system may use the classifier to perform document classification and subsequently obtain a new training set of images that show respective documents. The system may retrain the classifier based on the new training set of images that show respective documents. As another example, the system may use the classifier to perform document classifications and subsequently obtain feedback relating to performed document classifications. The system may retrain the classifier based on the obtained feedback.

FIG. 6 illustrates a schematic diagram of an exemplary generic computer system 600. The system 600 can be used for the operations described in association with the processes 400 and 500 according to some implementations. The system 600 is intended to represent various forms of digital computers, such as laptops, desktops, workstations, personal digital assistants, servers, blade servers, mainframes, mobile devices and other appropriate computers. The components shown here, their connections and relationships, and their functions, are exemplary only, and do not limit implementations of the inventions described and/or claimed in this document.

The system 600 includes a processor 610, a memory 620, a storage device 630, and an input/output device 640. Each of the components 610, 620, 630, and 620 are interconnected using a system bus 650. The processor 610 may be enabled for processing instructions for execution within the system 600. In one implementation, the processor 610 is a single-threaded processor. In another implementation, the processor 610 is a multi-threaded processor. The processor 610 may be enabled for processing instructions stored in the memory 620 or on the storage device 630 to display graphical information for a user interface on the input/output device 640.

The memory 620 stores information within the system 600. In one implementation, the memory 620 is a computer-readable medium. In one implementation, the memory 620 is a volatile memory unit. In another implementation, the memory 620 is a non-volatile memory unit.

The storage device 630 may be enabled for providing mass storage for the system 600. In one implementation, the storage device 630 is a computer-readable medium. In various different implementations, the storage device 630 may be a floppy disk device, a hard disk device, an optical disk device, or a tape device.

The input/output device 640 provides input/output operations for the system 600. In one implementation, the input/output device 640 includes a keyboard and/or pointing device. In another implementation, the input/output device 640 includes a display unit for displaying graphical user interfaces.

Embodiments and all of the functional operations described in this specification may be implemented in digital electronic circuitry, or in computer software, firmware, or hardware, including the structures disclosed in this specification and their structural equivalents, or in combinations of one or more of them. Embodiments may be implemented as one or more computer program products, *i.e.,* one or more modules of computer program instructions encoded on a computer readable medium for execution by, or to control the operation of, data processing apparatus. The computer readable medium may be a machine-readable storage device, a machine-readable storage substrate, a memory device, a composition of matter effecting a machine-readable propagated signal, or a combination of one or more of them. The term "data processing apparatus" encompasses all apparatus, devices, and machines for processing data, including by way of example a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal, *e.g.,* a machine-generated electrical, optical, or electromagnetic signal that is generated to encode information for transmission to suitable receiver apparatus.

A computer program (also known as a program, software, software application, script, or code) may be written in any form of programming language, including compiled or interpreted languages, and it may be deployed in any form, including as a stand alone program or as a module, component, subroutine, or other unit suitable for use in a computing environment. A computer program does not necessarily correspond to a file in a file system. A program may be stored in a portion of a file that holds other programs or data (*e.g.,* one or more scripts stored in a markup language document), in a single file dedicated to the program in question, or in multiple coordinated files (*e.g.,* files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry, *e.g.,* an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both.

The essential elements of a computer are a processor for performing instructions and one or more memory devices for storing instructions and data. Generally, a computer will also include, or be operatively coupled to receive data from or transfer data to, or both, one or more mass storage devices for storing data, *e.g.,* magnetic, magneto optical disks, or optical disks. However, a computer need not have such devices. Moreover, a computer may be embedded in another device, *e.g.,* a tablet computer, a mobile telephone, a personal digital assistant (PDA), a mobile audio player, a Global Positioning System (GPS) receiver, to name just a few. Computer readable media suitable for storing computer program instructions and data include all forms of non volatile memory, media and memory devices, including by way of example semiconductor memory devices, *e.g.,* EPROM, EEPROM, and flash memory devices; magnetic disks, *e.g.,* internal hard disks or removable disks; magneto optical disks; and CD ROM and DVD-ROM disks. The processor and the memory may be supplemented by, or incorporated in, special purpose logic circuitry.

To provide for interaction with a user, embodiments may be implemented on a computer having a display device, *e.g.,* a CRT (cathode ray tube) or LCD (liquid crystal display) monitor, for displaying information to the user and a keyboard and a pointing device, *e.g.,* a mouse or a trackball, by which the user may provide input to the computer. Other kinds of devices may be used to provide for interaction with a user as well; for example, feedback provided to the user may be any form of sensory feedback, *e.g.,* visual feedback, auditory feedback, or tactile feedback; and input from the user may be received in any form, including acoustic, speech, or tactile input.

Embodiments may be implemented in a computing system that includes a back end component, *e.g.,* as a data server, or that includes a middleware component, *e.g.,* an application server, or that includes a front end component, *e.g.,* a client computer having a graphical user interface or a Web browser through which a user may interact with an implementation, or any combination of one or more such back end, middleware, or front end components. The components of the system may be interconnected by any form or medium of digital data communication, *e.g.,* a communication network. Examples of communication networks include a local area network ("LAN") and a wide area network ("WAN"), *e.g.,* the Internet.

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

In each instance where an HTML file is mentioned, other file types or formats may be substituted. For instance, an HTML file may be replaced by an XML, JSON, plain text, or other types of files. Moreover, where a table or hash table is mentioned, other data structures (such as spreadsheets, relational databases, or structured files) may be used.

Thus, particular embodiments have been described. Other embodiments are within the scope of the following claims. For example, the actions recited in the claims may be performed in a different order and still achieve desirable results.

## Claims

1. A computer-implemented method comprising:
receiving an image that shows a document;
analyzing the image to identify visible features of the document;
providing, to a classifier, data that characterizes the identified visible features of the document;
determining, by the classifier and based on the data that characterizes the identified visible features of the document, a particular document type among a plurality of pre-defined document types that corresponds to the document shown in the image; and
outputting an indication of the particular document type that corresponds to the document shown in the image.

2. The method of claim 1, further comprising generating a structured dataset that characterizes the document, wherein generating the structured dataset comprises:
based on the determined particular document type that corresponds to the document shown in the image, identifying fields of information associated with the particular document;
based on the identified visible features of the document, identifying values for the identified fields of information associated with the particular document; and
generating a structured dataset that characterizes the document using the identified fields of information associated with the particular document and the identified values for the identified fields of information.

3. The method of claim 2, wherein identifying values for the identified fields of information associated with the particular document does not comprise converting the image to text.

4. The method of claim 2 or 3, further comprising providing the generated structured dataset to a corresponding department for processing.

5. The method of any of claims 1 to 4, comprising determining the particular document type that corresponds to the document shown in the image without converting the document to text.

6. The method of any of claims 1 to 5, wherein analyzing the image to identify visible features of the document comprises analyzing the image to identify one or more of (i) tables, (ii) logos, (iii) headers, (iv) stamps, (v) captions, (vi) graphs, (vii) bullet points or (viii) handwritten text included in the image.

7. The method of any of claims 1 to 6, further comprising:
identifying metadata associated with the document, the metadata including data that is not among the visible features of the document shown in the image; and
providing, to the classifier, the identified metadata associated with the document;
wherein the particular document type is determined by the classifier further based on the identified metadata.

8. The method of claim 7, wherein the metadata associated with the document includes one or more of (i) a date the document was received, (ii) a sender of the document, (iii) an address of the sender of the document, (iv) a number of pages of the document, (v) an intended recipient of the document, and (vi) bank account details.

9. The method of any of claims 1 to 8, wherein analyzing the image to identify visible features of the document comprises comparing one or more portions of the image to a collection of pre-stored images to determine an image match.

10. The method of any of claims 1 to 9, wherein analyzing the image to identify visible features of the document comprises comparing the format of one or more portions of the image to a collection of pre-stored formatted images to determine an image format match.

11. The method of any of claims 1 to 10, wherein analyzing the image to identify visible features of the document does not require converting the document to text.

12. The method of any of claims 1 to 11, further comprising training the classifier to perform document classification, the training comprising:
obtaining a training set of images that show respective documents;
analyzing the training set of images to identify visible features of the documents;
identifying metadata associated with the documents; and
training the classifier based on the identified visible features of the documents and the identified metadata associated with the documents.

13. The method of claim 12, further comprising:
using the classifier to perform document classification;
obtaining a new training set of images that show respective documents; and
retraining the classifier based on the new training set of images that show respective documents.

14. The method of claim 12, further comprising:
using the classifier to perform document classifications;
obtaining feedback relating to performed document classifications; and
retraining the classifier based on the obtained feedback.

15. A system comprising:
one or more computers; and
one or more computer-readable media coupled to the one or more computers having instructions stored thereon which, when executed by the one or more computers, cause the one or more computers to perform operations comprising:
receiving an image that shows a document;
analyzing the image to identify visible features of the document;
providing, to a classifier, data that characterizes the identified visible features of the document;
determining, by the classifier and based on the data that characterizes the identified visible features of the document, a particular document type among a plurality of pre-defined document types that corresponds to the document shown in the image; and
outputting an indication of the particular document type that corresponds to the document shown in the image.

16. The system of claim 15, wherein determining a particular document type that corresponds to the document shown in the image does not require converting the document to text.

17. The system of claim 15 or 16, further comprising generating a structured dataset that characterizes the document, wherein generating a structured dataset comprises:
based on the determined particular document type that corresponds to the document shown in the image, identifying fields of information associated with the particular document;
based on the identified visible features of the document, identifying values for the identified fields of information associated with the particular document; and
generating a structured dataset that characterizes the document using the identified fields of information and corresponding identified values.

18. The system of claim 17, wherein identifying values for the identified fields of information does not comprise converting the image to text.

19. The system of claim 17 or 18, further comprising providing the generated structured dataset to a corresponding department for processing.

20. One or more computer storage media encoded with a computer program, the program comprising instructions that when executed by data processing apparatus cause the data processing apparatus to perform operations comprising:
receiving an image that shows a document;
analyzing the image to identify visible features of the document;
providing, to a classifier, data that characterizes the identified visible features of the document;
determining, by the classifier and based on the data that characterizes the identified visible features of the document, a particular document type among a plurality of pre-defined document types that corresponds to the document shown in the image; and
outputting an indication of the particular document type that corresponds to the document shown in the image.
